(19) Europäisches Patentamt
European Patent Office
Office européen des brevets

(11) **EP 4 310 829 B1**

(12) **EUROPEAN PATENT SPECIFICATION**

(45) Date of publication and mention of the grant of the patent:
**04.06.2025 Bulletin 2025/23**

(21) Application number: **23184454.9**

(22) Date of filing: **10.07.2023**

(51) International Patent Classification (IPC):
**G10K 9/22** *(2006.01)*   **B01J 20/18** *(2006.01)*
**C01B 39/02** *(2006.01)*   **H04R 1/28** *(2006.01)*

(52) Cooperative Patent Classification (CPC):
**C01B 39/026; B01J 20/18; G10K 9/22;**
**H04R 1/2869;** H04R 2201/029; H04R 2499/11

(54) **IRON-MODIFIED ACOUSTIC MATERIAL, PRODUCTION METHOD THEREOF, SPEAKER AND ELECTRONIC DEVICE**

EISENMODIFIZIERTES AKUSTISCHES MATERIAL, HERSTELLUNGSVERFAHREN DAFÜR, LAUTSPRECHER UND ELEKTRONISCHE VORRICHTUNG

MATÉRIAU ACOUSTIQUE MODIFIÉ PAR DU FER, SON PROCÉDÉ DE PRODUCTION, HAUT-PARLEUR ET DISPOSITIF ÉLECTRONIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **18.07.2022 CN 202210840193**

(43) Date of publication of application:
**24.01.2024 Bulletin 2024/04**

(60) Divisional application:
**24195666.3 / 4 462 812**

(73) Proprietor: **SSI New Material (Zhenjiang) Co., Ltd.**
**Zhenjiang, Jiangsu 212001 (CN)**

(72) Inventors:
• **WANG, Yijun**
**Zhenjiang, Jiangsu, 212001 (CN)**
• **GONG, Chang**
**Zhenjiang, Jiangsu, 212001 (CN)**
• **ZHANG, Lei**
**Zhenjiang, Jiangsu, 212001 (CN)**
• **GUO, Mingbo**
**Zhenjiang, Jiangsu, 212001 (CN)**
• **MA, Yuanhong**
**Zhenjiang, Jiangsu, 212001 (CN)**

(74) Representative: **Atout PI Laplace**
**Immeuble Up On**
**25 Boulevard Romain Rolland**
**CS 40072**
**75685 Paris Cedex 14 (FR)**

(56) References cited:
**CN-A- 106 792 387**   **CN-A- 106 888 423**
**CN-A- 108 275 696**   **CN-A- 109 133 093**
**CN-A- 112 399 289**   **CN-B- 107 335 464**
**US-A1- 2019 202 706**   **US-A1- 2020 037 062**

**Description**

Field of Technology

The present disclosure relates to an iron-modified acoustic material, a production method thereof, a speaker and an electronic device, and belongs to the field of materials, especially the technical field of electronic acoustic materials.

Background of Art

With the prosperity of social economy and the improvement of consumption level, people's demand for quality of life is increasing, and the cell phone, as the most important consumer electronics, plays a very important role in life. For the speaker as an important part of the cell phone, its quality is also increasingly important.

In particular, for the speaker of the cell phone, it is required to provide excellent acoustic performance while keeping the size as small as possible. The sound quality of the speaker is closely related to its design and manufacturing process, especially the design of the size of the rear cavity of the speaker. Usually, the smaller the rear cavity of the speaker, the worse the acoustic response of low frequency band, the worse the acoustic performance such as sound quality. Therefore, it is necessary to try to expand the rear cavity of the speaker to enhance its acoustic response in low frequency band. At present, the traditional acoustic materials for speakers are obtained by using silicon-aluminum molecular sieves or titanium-silica molecular sieves with MFI structure as main components, and shaping with binders and additives. Since the speakers are mainly targeted for the consumer market, the stability and reliability are among the key considerations in addition to acoustic performance. Therefore, the ratio of silicon to aluminum in the molecular sieves had to be increased, and even all-silicon molecular sieves were manufactured, to optimize the acoustic performance. However, due to the poor structural stability of high-silicon molecular sieves, the acoustic performance, stability and reliability of acoustic materials prepared from the currently used molecular sieve materials still cannot meet the requirements of people.

CN106888423 A describes a material comprising nano zeolite particle of MEL type for acoustic applications, the zeolite further being an iron-modified molecular sieve, and the material further comprising a binder, a dispersant and an auxiliary agent.

CN107335464 B describes a molecular sieve catalyst, wherein an iron content is at 64 ppm.

CN106792387 A describes an acoustic material comprising a MEL molecular sieve further comprising iron in its framework, a solvent, an adhesive and an auxiliary agent.

Therefore, it has been an urgent technical problem in the field to provide a new iron-modified acoustic material, a production method thereof, a speaker and an electronic device.

Summary of the invention

In order to solve the above-mentioned disadvantages and defects, it is an object of the present disclosure to provide an iron-modified acoustic material.

It is another object of the present disclosure to provide a method for producing the iron-modified acoustic material.

It is a further object of the present disclosure to provide a speaker provided with the iron-modified acoustic material assembled in a rear cavity thereof.

It is a still further object of the present disclosure is to provide an electronic device provided with the iron-modified acoustic material in a rear cavity of a speaker thereof.

In order to achieve the above objects, in one aspect, the present disclosure provides an iron-modified acoustic material, prepared by homogeneously mixing an iron-modified molecular sieve, a binder, a dispersant and an auxiliary agent and then shaping the mixture; wherein the content of the iron-modified molecular sieve is not less than 70%, the content of iron is 0.004-1.7%, the dry basis content of the dispersant is not more than 1%, and the dry basis content of the auxiliary agent is not more than 15%, based on 100% of the total weight of the iron-modified acoustic material; wherein the iron-modified molecular sieve contains silica, alumina and iron elements in the framework thereof; the auxiliary agent comprises one or more of diatomite, silica fume, bentonite and smectite.

In a specific embodiment of the iron-modified acoustic material of the present disclosure, the content of iron in the iron-modified acoustic material is 0.005-0.05%, based on 100% of the total weight of the iron-modified acoustic material.

In a specific embodiment of the iron-modified acoustic material of the present disclosure, the iron-modified molecular sieve is prepared by modifying a molecular sieve with an iron source, and the content of iron is 0.005-2%, based on 100% of the total weight of the iron-modified molecular sieve.

In a specific embodiment of the iron-modified acoustic material of the present disclosure, the iron-modified molecular sieve is produced by a method comprising:

1) mixing the molecular sieve with water, warming up the resultant mixture solution to 70-90°C and mixing the mixture solution homogeneously;

2) adding an iron source to the mixture solution obtained in step 1) and reacting at a temperature of 70-90°C for 4-6 h;

3) upon completion of the reaction, subjecting the solution obtained in step 2) to a solid-liquid separation, continuously washing the separated solid until the conductivity of washing water is < 300 $\mu$S/cm, drying the solid at a temperature of 100-200°C, and then roasting at a temperature of 350-650°C for 2-6 h, to obtain the iron-modified molecular sieve.

In some examples of the present disclosure, in step 1), the molecular sieve is mixed with water, which is 10 times the weight of the molecular sieve. Moreover, the homogeneous mixing can be achieved by stirring.

In a specific embodiment of the iron-modified acoustic material of the present disclosure, in the molecular sieve, the molar ratio of silica to alumina is 50-5000.

In a specific embodiment of the iron-modified acoustic material of the present disclosure, the iron source comprises one or more of ferric chloride, ferric sulfate, ferrous sulfate, ferric acetate and the like, and is used in an amount of 0.05-0.25 by weight of the molecular sieve.

In a specific embodiment of the iron-modified acoustic material of the present disclosure, the content of the binder is 1-15% measured as the content of the solid component in the binder, i.e., the dry basis content of the binder, based on 100% of the total weight of the iron-modified acoustic reinforcing material.

In a specific embodiment of the iron-modified acoustic material of the present disclosure, the binder comprises an inorganic binder and/or an organic binder;

wherein the inorganic binder comprises one or more of silica sol, alumina sol, water glass, pseudo-boehmite, and the like; and the organic binder comprises one or more of acrylate-based, epoxy-based, polyurethane-based organic binders and the like.

In some examples of the present disclosure, the dry basis content of the dispersant may be, for example, 0.84%, 0.96%, 0.90%, 0.44%, or the like, based on 100% of the total weight of the iron-modified acoustic material.

In a specific embodiment of the iron-modified acoustic material of the present disclosure, the dispersant comprises one or more of glycerin, HPMA, liquid paraffin, and the like.

In some examples of the present disclosure, the dry basis content of the auxiliary agent may be, for example, 14.43%, 1.62%, 3.81%, 3.70%, or the like, based on 100% of the total weight of the iron-modified acoustic material.

In a specific embodiment of the iron-modified acoustic material of the present disclosure, the iron-modified acoustic material is in the shape of microspheres (particles) having a size of 50-400 $\mu$m, blocks or flakes.

In the present disclosure, the type and specific substance of the molecular sieve used are not specifically limited. The molecular sieve may be a hydrogen type molecular sieve or a sodium type molecular sieve, and the specific substance of the molecular sieve can be selected according to the actual operational needs. In the process of modifying a molecular sieve with an iron source, at least a part of iron ions and hydrogen or sodium ions on the framework of the molecular sieve undergo exchange reaction, and iron ions are exchanged onto the framework, to obtain an iron-modified molecular sieve.

In another aspect, the present disclosure further provides a method for producing the iron-modified acoustic material, comprising:

homogeneously mixing an iron-modified molecular sieve, a binder, a dispersant, and an auxiliary agent to obtain a suspension, and shaping the suspension to produce the iron-modified acoustic material,

wherein the content of the iron-modified molecular sieve is not less than 70%, the content of iron is 0.004-1.7%, the dry basis content of the dispersant is 0-1%, and the dry basis content of the auxiliary agent is 0-15%, based on 100% of the total weight of the iron-modified acoustic material.

In the present disclosure, the shaping method is not specifically limited, and the person skilled in the art can reasonably select the shaping method according to the actual operational needs, as long as the objects of the present disclosure can be achieved. For example, when microspheres of the iron-modified acoustic material are to be produced, the shaping method may be spray drying, freeze shaping, oil-column shaping, rolling ball shaping, or the like; and when blocks or flakes of the iron-modified acoustic material are to be produced, the shaping may be carried out by a hot air drying method.

In a further aspect, the present disclosure further provides a speaker comprising one or more acoustic sensors and one or more housings which together form a rear cavity of the speaker, wherein the rear cavity of the speaker is provided with the iron-modified acoustic material.

In a still further aspect, the present disclosure further provides an electronic device provided with the iron-modified acoustic material in a rear cavity of a speaker of the electronic device.

In a specific embodiment of the electronic device of the present disclosure, the electronic device comprises a smartphone, a TWS earphone, a headset, a smart glass, a smart watch, a VR device, a AR device, a tablet PC or a thin and light laptop.

In the present disclosure, the molecular sieve is modified with the iron source to produce the iron-modified molecular sieve, and the iron-modified acoustic material is produced from the iron-modified molecular sieves as a raw material, and provided in the rear cavity of the speaker, which can substantially improve its stability and reliability in terms of acoustic performance. The stability and reliability of the molecular sieve acoustic materials with silica-alumina ratio in any range can be improved after iron modification. Especially for the molecular sieve acoustic materials with low silica-alumina ratio (e.g., silica-alumina ratio ≤400), the stability and reliability in acoustic performance can be improved more significantly.

Detailed Description of Preferred Embodiments

A "range", as disclosed in the present disclosure, is given in the form of a lower limit and an upper limit. There may be one or more lower limits, and one or more upper limits, respectively. A given range is defined by selecting a lower limit and an upper limit, and the selected lower and upper limits define the boundaries of a particular range. All ranges limited in this manner are combinable, i.e., any lower limit can be combined with any upper limit to form a range. For example, if the ranges 60-120 and 80-110 are listed for a specific parameter, this is understood to mean that the ranges 60-110 and 80-120 are also expectable. In addition, for a range, if the minimum values listed are 1 and 2 and the maximum values listed are 3, 4 and 5, all the following ranges can be expected: 1-3, 1-4, 1-5, 2-3, 2-4 and 2-5.

In the present disclosure, the numerical range "a-b" indicates an abbreviated representation of any combination of real numbers between a and b, where both a and b are real numbers, unless specified otherwise. For example, the numerical range "0-5" indicates that all real numbers between "0-5" are already listed in the present disclosure, and "0-5" is only an abbreviated representation of these combinations of values.

The term "two" as used in this specification means "at least two", unless specified otherwise.

In the present disclosure, all embodiments as well as preferred embodiments mentioned in the present disclosure can be combined with each other to form new technical solutions, unless specified otherwise.

In the present disclosure, all technical features as well as preferred features mentioned in the present disclosure can be combined with each other to form new technical solutions, unless specified otherwise.

In the present disclosure, all the steps mentioned herein may be performed sequentially or randomly, but preferably sequentially, unless specified otherwise. For example, the method including steps (a) and (b) indicates that the method may include steps (a) and (b) performed sequentially, or may include steps (b) and (a) performed sequentially. For example, when reference to the method may further include step (c), it means that step (c) may be added to the method in any order, for example, the method may include steps (a), (b) and (c), or may include steps (a), (c) and (b), or may include steps (c), (a) and (b), etc.

In the present disclosure, the "comprise" mentioned herein may be either open-ended, or closed-ended, unless specified otherwise. For example, the "comprise" may indicate that other components not listed may also be included, or only listed components may be included.

In order to make the objects, technical solutions and advantages of the present disclosure more clearly understood, the present disclosure is described in further detail below in conjunction with the tables and examples. The examples described below are a part of the examples of the present disclosure, and not all of them. They are used only to illustrate the present disclosure and should not be regarded as limiting the scopes of the present disclosure. The examples, in which no specific conditions are indicated, are performed according to conventional conditions or conditions recommended by the manufacturer. The reagents or apparatus used, for which the manufacturers are not indicated, are conventional products that can be obtained by commercially available purchase or by methods known in the art. For example, both the ZSM-5 molecular sieve and ZSM-35 molecular sieve described in the present disclosure are molecular sieve materials known in the art and can be purchased directly from the market or synthesized according to literature methods. For example, the molecular sieve described in the present disclosure is a molecular sieve material known in the art and can be purchased directly from the market or synthesized according to literature methods, for example, ZSM-5 molecular sieves, SAPO-34 molecular sieves, Y-type molecular sieves, 3A molecular sieves, or the like.

The silica sol used in Comparative Examples, Application Examples or Comparative Application Examples of the present disclosure is a commercial product purchased from Shandong Peak-tech New Material Co., Ltd, Model HP3010, with a silica content of 30 % by weight.

The alumina sol used in Application Examples or Comparative Application Examples of the present disclosure is a commercial product purchased from Hunan Xinpeng Petrochemical Co., Ltd, , with a alumina content of 20 % by weight.

The epoxy binder used in Application Examples or Comparative Application Examples of the present disclosure is a commercial product purchased from Hunan Linte Technology Co., Ltd, Model LINTEC EP-602PRO, with a viscosity of 4000-6000 cps.

The water-based acrylate binder used in the Application Examples or Comparative Application Examples of the present disclosure is a commercial product purchased from Guangzhou Guanzhi New Material Technology Co., Ltd, Model PA-4867, with a viscosity of <2000 mPa·s.

The water glass used in Application Examples or Comparative Application Examples of the present disclosure is purchased from Dongtai Yongtai Chemical Co., Ltd, with a molar ratio ($SiO_2/Na_2O$) of 1.5.

The kaolin used in Application Examples or Comparative Application Examples of the present disclosure is a commercial product purchased from China Kaolin Clay Co., Ltd, Model Hand 2# powder, with a solid content of 85%.

The diatomite used in Application Examples or Comparative Application Examples of the present disclosure is T-type diatomite manufactured by Qingdao Shengtai Silicon Industry Co., Ltd, with a solid content of 85%.

The bentonite used in Application Examples or Comparative Application Examples of the present disclosure is a commercial product purchased from Aladdin Reagent (Shanghai) Co., Ltd, Model Bentone SD-1.

The silica fume used in Application Examples or Comparative Application Examples of the present disclosure is a commercial product purchased from Aladdin Reagent (Shanghai) Co., Ltd, with a purity of >99% and a particle size of 1 μm.

Molecular sieve Comparative Examples

Comparative Example 1

This Comparative Example provides a molecular sieve, which was prepared by a production method comprising the following specific steps:

653.33 g of silica sol, 98.00 g of tetrapropylammonium bromide, 172.48 g of ethylamine, 666.38 g of deionized water, 38.0 g of aluminum sulfate and 20.7 g of caustic soda were weighed and added sequentially to a 2 L crystallization kettle, warmed up to 60°C at 2°C/min under a stirring speed of 400 rpm, and reacted at 60°C for 24 h. It was then warmed up to 160°C at 2°C/min and reacted under this condition for 48 h.

Upon completion of the reaction, when the temperature of the crystallization kettle was reduced to below 50°C, the slurry of the crystallization kettle was removed and the solid was separated by centrifugation. The solid was washed with continuous deionized water until the conductivity of the washing water was <100 μS/cm, at which point the washing was stopped.

The washed solid was put into an oven for drying overnight and roasted at 550°C for 4 h. The sample obtained was labeled as Comparative Sample 1, where the molar ratio of silica to alumina in the feed was 57.

Comparative Example 2

The molecular sieve provided in this Comparative Example was prepared by the same preparation method as that of Comparative Example 1, except that the aluminum sulfate fed in this Comparative Example was adjusted to 19.0 g, and the sample obtained was labeled as Comparative Sample 2, where the molar ratio of silica to alumina in the feed was 114.

Comparative Example 3

The molecular sieve provided in this Comparative Example was prepared by the same preparation method as that of Comparative Example 1, except that the aluminum sulfate fed in this Comparative Example was adjusted to 9.80 g, and the sample obtained was labeled as Comparative Sample 3, where the molar ratio of silica to alumina in the feed was 222.

Comparative Example 4

The molecular sieve provided in this Comparative Example was prepared by the same preparation method as that of Comparative Example 1, except that the aluminum sulfate fed in this Comparative Example was adjusted to 4.57 g, and the sample obtained was labeled as Comparative Sample 4, where the molar ratio of silica to alumina in the feed was 476.

Comparative Example 5

The molecular sieve provided in this Comparative Example was prepared by the same preparation method as that of Comparative Example 1, except that the aluminum sulfate fed in this Comparative Example was adjusted to 2.61 g, and the sample obtained was labeled as Comparative Sample 5, where the molar ratio of silica to alumina in the feed was 833.

Comparative Example 6

The molecular sieve provided in this Comparative Example was prepared by the same preparation method as that of Comparative Example 1, except that the aluminum sulfate fed in this Comparative Example was adjusted to 0.65 g, and the sample obtained was labeled as Comparative Sample 6, where the molar ratio of silica to alumina in the feed was 3333.

Comparative Example 7

The molecular sieve provided in this Comparative Example was prepared by the same preparation method as that of Comparative Example 1, except that the aluminum sulfate fed in this Comparative Example was adjusted to 0.33 g, and the sample obtained was labeled as Comparative Sample 7, where the molar ratio of silica to alumina in the feed was 6666.

Comparative Example 8

This Comparative Example provided an iron-modified molecular sieve, which was prepared by a production method comprising the following specific steps:

1) 2000 g of deionized water was weighed and added to a 3 L plastic beaker, and then 200 g of Comparative Sample 1 was added to the plastic beaker. It was warmed up to 80°C under stirring, such as stirring for 30 min.
2) After the temperature of the mixture solution obtained in step 1) was warmed up to 90°C, 60 g of ferric acetate was weighed and added to the mixture solution, and allowed to react under stirring for 4 h.
3) After 4 h, the solid and liquid were separated from the slurry by centrifugation, and the solid was washed continuously using deionized water until the conductivity of the washing water was < 300 $\mu$S/cm. When the washing was stopped, the filter cake was removed and dried at 200°C and roasted at 650°C for 2 h. The roasted sample was the iron-modified molecular sieve, labeled as Comparative Sample 8.

Test 1

In this test, elemental analysis measurements were performed on Comparative Samples 1-8, and the elemental contents of Si, Al, Fe and the like in these samples were characterized using an inductively coupled plasma analyzer (ICP, Perkin-Elmer 3300 DV). The measurement results obtained are shown in Table 1 below:

Table 1

| Sample name | Molar ratio of silica to alumina | Mass content of element Fe, % |
|---|---|---|
| Comparative Sample 1 | 52 | 0.001 |
| Comparative Sample 2 | 106 | 0.002 |
| Comparative Sample 3 | 203 | 0.001 |
| Comparative Sample 4 | 398 | 0.003 |
| Comparative Sample 5 | 785 | 0.001 |
| Comparative Sample 6 | 2891 | 0.002 |
| Comparative Sample 7 | 4895 | 0.001 |
| Comparative Sample 8 | 52 | 2.101 |

Examples of iron-modified molecular sieves

Example 1

This example provided an iron-modified molecular sieve, which was prepared by a production method comprising the following specific steps:

1) 2000 g of deionized water was weighed and added to a 3 L plastic beaker, and then 200 g of Comparative Sample 1 was added to the plastic beaker. It was warmed up to 80°C under stirring, such as stirring for 30 min.

2) After the temperature of the mixture solution obtained in step 1) was warmed up to 90°C, 20 g of ferric acetate was weighed and added to the mixture solution, and allowed to react under stirring for 4 h.

3) After 4 h, the solid and liquid were separated from the slurry by centrifugation, and the solid was washed continuously using deionized water until the conductivity of the washing water was < 300 μS/cm. When the washing was stopped, the filter cake was removed and dried at 200°C and roasted at 650°C for 2 h. The roasted sample was the iron-modified molecular sieve, labeled as Sample 1.

Example 2

This example provided an iron-modified molecular sieve, which was prepared by a production method comprising the following specific steps:

1) 2000 g of deionized water was weighed and added to a 3 L plastic beaker, and then 200 g of Comparative Sample 2 was added to the plastic beaker. It was warmed up to 80°C under stirring, such as stirring for 30 min.

2) After the temperature of the mixture solution obtained in step 1) was warmed up to 90°C, 20 g of ferric acetate was weighed and added to the mixture solution, and allowed to react under stirring for 4 h.

3) After 4 h, the solid and liquid were separated from the slurry by centrifugation, and the solid was washed continuously using deionized water until the conductivity of the washing water was < 300 μS/cm. When the washing was stopped, the filter cake was removed and dried at 200°C and roasted at 650°C for 2 h. The roasted sample was the iron-modified molecular sieve, labeled as Sample 2.

Example 3

This example provided an iron-modified molecular sieve, which was prepared by a production method comprising the following specific steps:

1) 2000 g of deionized water was weighed and added to a 3 L plastic beaker, and then 200 g of Comparative Sample 3 was added to the plastic beaker. It was warmed up to 70°C under stirring, such as stirring for 30 min.

2) After the temperature of the mixture solution obtained in step 1) was warmed up to 70°C, 40 g of ferric chloride was weighed and added to the mixture solution, and allowed to react under stirring for 4 h.

3) After 4 h, the solid and liquid were separated from the slurry by centrifugation, and the solid was washed continuously using deionized water until the conductivity of the washing water was < 300 μS/cm. When the washing was stopped, the filter cake was removed and dried at 100°C and roasted at 350°C for 6 h. The roasted sample was the iron-modified molecular sieve, labeled as Sample 3.

Example 4

This example provided an iron-modified molecular sieve, which was prepared by a production method comprising the following specific steps:

1) 2000 g of deionized water was weighed and added to a 3 L plastic beaker, and then 200 g of Comparative Sample 4 was added to the plastic beaker. It was warmed up to 90°C under stirring, such as stirring for 30 min.

2) After the temperature of the mixture solution obtained in step 1) was warmed up to 90°C, 20 g of ferric sulfate was weighed and added to the mixture solution, and allowed to react under stirring for 4 h.

3) After 4 h, the solid and liquid were separated from the slurry by centrifugation, and the solid was washed continuously using deionized water until the conductivity of the washing water was < 300 μS/cm. When the washing was stopped, the filter cake was removed and dried at 200°C and roasted at 650°C for 2 h. The roasted sample was the iron-modified molecular sieve, labeled as Sample 4.

Example 5

This example provided an iron-modified molecular sieve, which was prepared by a production method comprising the following specific steps:

1) 2000 g of deionized water was weighed and added to a 3 L plastic beaker, and then 200 g of Comparative Sample 5 was added to the plastic beaker. It was warmed up to 90°C under stirring, such as stirring for 30 min.

2) After the temperature of the mixture solution obtained in step 1) was warmed up to 90°C, 20 g of ferrous sulfate was weighed and added to the mixture solution, and allowed to react under stirring for 4 h.

3) After 4 h, the solid and liquid were separated from the slurry by centrifugation, and the solid was washed continuously using deionized water until the conductivity of the washing water was < 300 μS/cm. When the washing was stopped, the filter cake was removed and dried at 150°C and roasted at 550°C for 4 h. The roasted sample was the iron-modified molecular sieve, labeled as Sample 5.

Example 6

This example provided an iron-modified molecular sieve, which was prepared by a production method comprising the following specific steps:

1) 2000 g of deionized water was weighed and added to a 3 L plastic beaker, and then 200 g of Comparative Sample 6 was added to the plastic beaker. It was warmed up to 80°C under stirring, such as stirring for 30 min.
2) After the temperature of the mixture solution obtained in step 1) was warmed up to 80°C, 10 g of ferric acetate was weighed and added to the mixture solution, and allowed to react under stirring for 4 h.
3) After 4 h, the solid and liquid were separated from the slurry by centrifugation, and the solid was washed continuously using deionized water until the conductivity of the washing water was < 300 μS/cm. When the washing was stopped, the filter cake was removed and dried at 150°C and roasted at 550°C for 4 h. The roasted sample was the iron-modified molecular sieve, labeled as Sample 6.

Example 7

This example provided an iron-modified molecular sieve, which was prepared by a production method comprising the following specific steps:

1) 2000 g of deionized water was weighed and added to a 3 L plastic beaker, and then 200 g of Comparative Sample 7 was added to the plastic beaker. It was warmed up to 80°C under stirring, such as stirring for 30 min.
2) After the temperature of the mixture solution obtained in step 1) was warmed up to 80°C, 5 g of ferric acetate and 10 g of ferrous sulfate were weighed and added to the mixture solution, and allowed to react under stirring for 4 h.
3) After 4 h, the solid and liquid were separated from the slurry by centrifugation, and the solid was washed continuously using deionized water until the conductivity of the washing water was < 300 μS/cm. When the washing was stopped, the filter cake was removed and dried at 150°C and roasted at 550°C for 4 h. The roasted sample was the iron-modified molecular sieve, labeled as Sample 7.

Example 8

This example provided an iron-modified molecular sieve, which was prepared by a production method comprising the following specific steps:

1) 2000 g of deionized water was weighed and added to a 3 L plastic beaker, and then 200 g of Comparative Sample 1 was added to the plastic beaker. It was warmed up to 80°C under stirring, such as stirring for 30 min.
2) After the temperature of the mixture solution obtained in step 1) was warmed up to 90°C, 50 g of ferric acetate was weighed and added to the mixture solution, and allowed to react under stirring for 4 h.
3) After 4 h, the solid and liquid were separated from the slurry by centrifugation, and the solid was washed continuously using deionized water until the conductivity of the washing water was < 300 μS/cm. When the washing was stopped, the filter cake was removed and dried at 200°C and roasted at 650°C for 2 h. The roasted sample was the iron-modified molecular sieve, labeled as Sample 8.

Test 2

In this test, elemental analysis measurements were performed on the Samples 1-8, and the elemental contents of Si, Al, Fe and the like in these samples were characterized using an inductively coupled plasma analyzer (ICP, Perkin-Elmer 3300 DV). The measurement results obtained are shown in Table 2 below:

Table 2

| Sample name | Molar ratio of silica to alumina | Mass content of element Fe, % |
|---|---|---|
| Sample 1 | 54 | 0.050 |
| Sample 2 | 102 | 0.041 |

(continued)

| Sample name | Molar ratio of silica to alumina | Mass content of element Fe, % |
|---|---|---|
| Sample 3 | 208 | 0.048 |
| Sample 4 | 401 | 0.038 |
| Sample 5 | 772 | 0.025 |
| Sample 6 | 2812 | 0.008 |
| Sample 7 | 4913 | 0.005 |
| Sample 8 | 52 | 2.000 |

From Table 2 above, it can be seen that all of the molecular sieves prepared in Examples 1-8 of the present disclosure contain iron. That is, the iron-modified molecular sieves are successfully produced in these examples.

Application Examples of iron-modified acoustic materials

Application Example 1

This Application Example provided an iron-modified acoustic material, which was prepared by a production method comprising the following specific steps:
100 g of Sample 1, 44 g of a water-based acrylate binder with a dry basis content of 40%, 1 g of glycerin and 100 g of water were weighed and mixed, stirred thoroughly for 1 h, and shaped by a spray drying process, to obtain a microsphere sample having a median diameter D50 of 372 μm, labeled as Application Sample 1. Based on 100% of the total weight of Application Sample 1, the mass content of the molecular sieve, that is, Sample 1, was 84.32%, the mass content of the binder was 14.84%, the mass content of the dispersant was 0.84%, and the mass content of the auxiliary agent was 0%.

Application Example 2

This Application Example provided an iron-modified acoustic material, which was prepared by a production method comprising the following specific steps:
100 g of Sample 2, 44 g of a water-based acrylate binder with a dry basis content of 40%, 1 g of glycerin and 100 g of water were weighed and mixed, stirred thoroughly for 1 h, and shaped by a spray drying process, to obtain a microsphere sample having a median diameter D50 of 356 μm, labeled as Application Sample 2. Based on 100% of the total weight of Application Sample 2, the mass content of the molecular sieve, that is, Sample 2, was 84.32%, the mass content of the binder was 14.84%, the mass content of the dispersant was 0.84%, and the mass content of the auxiliary agent was 0%.

Application Example 3

This Application Example provided an iron-modified acoustic material, which was prepared by a production method comprising the following specific steps:
100 g of Sample 3, 44 g of a water-based acrylate binder with a dry basis content of 40%, 1 g of glycerin and 100 g of water were weighed and mixed, stirred thoroughly for 1 h, and shaped by a spray drying process, to obtain a microsphere sample having a median diameter D50 of 365 μm, labeled as Application Sample 3. Based on 100% of the total weight of Application Sample 3, the mass content of the molecular sieve, that is, Sample 3, was 84.32%, the mass content of the binder was 14.84%, the mass content of the dispersant was 0.84%, and the mass content of the auxiliary agent was 0%.

Application Example 4

This Application Example provided an iron-modified acoustic material, which was prepared by a production method comprising the following specific steps:
100 g of Sample 4, 70 g of silica sol with a dry basis content of 30%, 24 g of diatomite and 100 g of water were weighed and mixed, stirred thoroughly for 1 h, and shaped by a spray drying process, to obtain a microsphere sample having a median diameter D50 of 52 μm, labeled as Application Sample 4. Based on 100% of the total weight of Application Sample 4, the mass content of the molecular sieve, that is, Sample 4, was 70.72%, the mass content of the binder was 14.85%, the mass content of the dispersant was 0%, and the mass content of the auxiliary agent was 14.43%.

Application Example 5

This Application Example provided an iron-modified acoustic material, which was prepared by a production method comprising the following specific steps:
100 g of Sample 5, 10 g of alumina sol with a dry basis content of 20%, 1 g of liquid paraffin, 2 g of silica fume and 100 g of water were weighed and mixed, stirred thoroughly for 1 h, and shaped by a spray drying process, to obtain a microsphere sample having a median diameter D50 of 145 $\mu$m, labeled as Application Sample 5. Based on 100% of the total weight of Application Sample 5, the mass content of the molecular sieve, that is, Sample 5, was 95.51%, the mass content of the binder was 1.91%, the mass content of the dispersant was 0.96%, and the mass content of the auxiliary agent was 1.62%.

Application Example 6

This Application Example provided an iron-modified acoustic material, which was prepared by a production method comprising the following specific steps:
100 g of Sample 6, 25 g of water glass with a dry basis content of 25%, 1 g of liquid paraffin, 5 g of bentonite and 100 g of water were weighed and mixed, stirred thoroughly for 1 h, and shaped by a spray drying process, to obtain a microsphere sample having a median diameter D50 of 213 $\mu$m, labeled as Application Sample 6. Based on 100% of the total weight of Application Sample 6, the mass content of the molecular sieve, that is, Sample 6, was 89.69%, the mass content of the binder was 5.60%, the mass content of the dispersant was 0.90%, and the mass content of the auxiliary agent was 3.81%.

Application Example 7

This Application Example provided an iron-modified acoustic material, which was prepared by a production method comprising the following specific steps:
100 g of Sample 7, 10 g of epoxy binder, 0.5 g of glycerin, 5 g of kaolin and 100 g of water were weighed and mixed, stirred thoroughly for 1 h, and shaped by a spray drying process, to obtain a microsphere sample having a median diameter D50 of 288 $\mu$m, labeled as Application Sample 7. Based on 100% of the total weight of Application Sample 7, the mass content of the molecular sieve, that is, Sample 7, was 87.15%, the mass content of the binder was 8.71%, the mass content of the dispersant was 0.44%, and the mass content of the auxiliary agent was 3.70%.

Application Example 8

This Application Example provided an iron-modified acoustic material, which was prepared by a production method comprising the following specific steps:
100 g of Sample 8, 44 g of a water-based acrylate binder with a dry basis content of 40%, 1 g of glycerin and 100 g of water were weighed and mixed, stirred thoroughly for 1 h, and shaped by a spray drying process, to obtain a microsphere sample having a median diameter D50 of 372 $\mu$m, labeled as Application Sample 8. Based on 100% of the total weight of Application Sample 8, the mass content of the molecular sieve, that is, Sample 8, was 84.32%, the mass content of the binder was 14.84%, the mass content of the dispersant was 0.84%, and the mass content of the auxiliary agent was 0%.

Comparative Application Examples of acoustic materials

Comparative Application Example 1

This Comparative Application Example provided an acoustic material, which was prepared by a production method comprising the following specific steps:
100 g of Comparative Sample 1, 44 g of a water-based acrylate binder with a dry basis content of 40%, 1 g of glycerin and 100 g of water were weighed and mixed, stirred thoroughly for 1 h, and shaped by a spray drying process, to obtain a microsphere sample having a median diameter D50 of 368 $\mu$m, labeled as Comparative Application Sample 1. Based on 100% of the total weight of Comparative Application Sample 1, the mass content of the molecular sieve, that is, Comparative Sample 1, was 84.32%, the mass content of the binder was 14.84%, the mass content of the dispersant was 0.84%, and the mass content of the auxiliary agent was 0%.

Comparative Application Example 2

This Comparative Application Example provided an acoustic material, which was prepared by a production method comprising the following specific steps:
100 g of Comparative Sample 2, 44 g of a water-based acrylate binder with a dry basis content of 40%, 1 g of glycerin and 100 g of water were weighed and mixed, stirred thoroughly for 1 h, and shaped by a spray drying process, to obtain a microsphere sample having a median diameter D50 of 375 μm, labeled as Comparative Application Sample 2. Based on 100% of the total weight of Comparative Application Sample 2, the mass content of the molecular sieve, that is, Comparative Sample 2, was 84.32%, the mass content of the binder was 14.84%, the mass content of the dispersant was 0.84%, and the mass content of the auxiliary agent was 0%.

Comparative Application Example 3

This Comparative Application Example provided an acoustic material, which was prepared by a production method comprising the following specific steps:
100 g of Comparative Sample 3, 44 g of a water-based acrylate binder with a dry basis content of 40%, 1 g of glycerin and 100 g of water were weighed and mixed, stirred thoroughly for 1 h, and shaped by a spray drying process, to obtain a microsphere sample having a median diameter D50 of 361 μm, labeled as Comparative Application Sample 3. Based on 100% of the total weight of Comparative Application Sample 3, the mass content of the molecular sieve, that is, Comparative Sample 3, was 84.32%, the mass content of the binder was 14.84%, the mass content of the dispersant was 0.84%, and the mass content of the auxiliary agent was 0%.

Comparative Application Example 4

This Comparative Application Example provided an acoustic material, which was prepared by a production method comprising the following specific steps:
100 g of Comparative Sample 4, 70 g of a silica sol with a dry basis content of 30%, 24 g of diatomite and 100 g of water were weighed and mixed, stirred thoroughly for 1 h, and shaped by a spray drying process, to obtain a microsphere sample having a median diameter D50 of 58 μm, labeled as Comparative Application Sample 4. Based on 100% of the total weight of Comparative Application Sample 4, the mass content of the molecular sieve, that is, Comparative Sample 4, was 70.72%, the mass content of the binder was 14.85%, the mass content of the dispersant was 0%, and the mass content of the auxiliary agent was 14.43%.

Comparative Application Example 5

This Comparative Application Example provided an acoustic material, which was prepared by a production method comprising the following specific steps:
100 g of Comparative Sample 5, 10 g of an alumina sol with a dry basis content of 20%, 1 g of liquid paraffin, 2 g of silica fume and 100 g of water were weighed and mixed, stirred thoroughly for 1 h, and shaped by a spray drying process, to obtain a microsphere sample having a median diameter D50 of 153 μm, labeled as Comparative Application Sample 5. Based on 100% of the total weight of Comparative Application Sample 5, the mass content of the molecular sieve, that is, Comparative Sample 5, was 95.51%, the mass content of the binder was 1.91%, the mass content of the dispersant was 0.96%, and the mass content of the auxiliary agent was 1.62%.

Comparative Application Example 6

This Comparative Application Example provided an acoustic material, which was prepared by a production method comprising the following specific steps:
100 g of Comparative Sample 6, 25 g of water glass with a dry basis content of 25%, 5 g of bentonite and 100 g of water were weighed and mixed, stirred thoroughly for 1 h, and shaped by a spray drying process, to obtain a microsphere sample having a median diameter D50 of 221 μm, labeled as Comparative Application Sample 6. Based on 100% of the total weight of Comparative Application Sample 6, the mass content of the molecular sieve, that is, Comparative Sample 6, was 89.69%, the mass content of the binder was 5.60%, the mass content of the dispersant was 0.90%, and the mass content of the auxiliary agent was 3.81%.

Comparative Application Example 7

This Comparative Application Example provided an acoustic material, which was prepared by a production method comprising the following specific steps:
100 g of Comparative Sample 7, 10 g of an epoxy binder, 0.5 g of glycerin, 5 g of kaolin and 100 g of water were weighed and mixed, stirred thoroughly for 1 h, and shaped by a spray drying process, to obtain a microsphere sample having a median diameter D50 of 297 μm, labeled as Comparative Application Sample 7. Based on 100% of the total weight of Comparative Application Sample 7, the mass content of the molecular sieve, that is, Comparative Sample 7, was 87.15%, the mass content of the binder was 8.71%, the mass content of the dispersant was 0.44%, and the mass content of the auxiliary agent was 3.70%.

Comparative Application Example 8

This Comparative Application Example provided an acoustic material, which was prepared by a production method comprising the following specific steps:

100 g of Comparative Sample 8, 44 g of a water-based acrylate binder with a dry basis content of 40%, 1 g of glycerin and 100 g of water were weighed and mixed, stirred thoroughly for 1 h, and shaped by a spray drying process, to obtain a microsphere sample having a median diameter D50 of 368 $\mu$m, labeled as Comparative Application Sample 8. Based on 100% of the total weight of Comparative Application Sample 8, the mass content of the molecular sieve, that is, Comparative Sample 8, was 84.32%, the mass content of the binder was 14.84%, the mass content of the dispersant was 0.84%, and the mass content of the auxiliary agent was 0%.

Test 3

In this test, each of Application Samples 1-8 and Comparative Application Samples 1-8 was tested for acoustic performance, specifically as follows:

0.14 g of each of Samples and Comparative Samples was taken for acoustic performance test. Herein, the acoustic performance test was performed using conventional methods in the art. For example, the acoustic performance of each of Samples and Comparative Samples can be tested in accordance with the method of "measurement of electrical impedance" shown in paragraphs 0049-0054 of Chinese patent publication CN105049997A. Specifically, each of Sample and Comparative Samples was tested in accordance with the method of "measurement of electrical impedance" to obtain an electrical impedance profile. The curve in the electrical impedance profile corresponds to the electrical impedance curve, where the highest point of the electrical impedance curve corresponds to the frequency $F_0$. $F_0$ measured when the speaker is not loaded with each of Samples and Comparative Samples is marked as $F_{0\text{-cavity}}$, and $F_0$ measured when the speaker is loaded with each of Samples and Comparative Samples is marked as $F_{0\text{-sample or Comparative Sample}}$. $\Delta F_0$ is calculated by the following equation:

$$\Delta F_0 = F_{0\text{-cavity}} - F_{0\text{-sample or Comparative Sample}}$$

In this test example, the testing environment is a speaker module having a target cavity of 0.2 cc, and the high temperature and high humidity refers to an environment with a relative humidity of 85% and a temperature of 85°C. The measurement results obtained are shown in Table 3 below:

Table 3

| Sample name | $\Delta F_0$/Hz | $\Delta F_0$ (high temperature and high humidity)/Hz | $\Delta F_0$ offset (high temperature and high humidity)/Hz |
|---|---|---|---|
| Application Sample 1 | 95 | 91 | -4 |
| Application Sample 2 | 99 | 94 | -5 |
| Application Sample 3 | 99 | 95 | -4 |
| Application Sample 4 | 102 | 98 | -4 |
| Application Sample 5 | 103 | 101 | -2 |
| Application Sample 6 | 105 | 103 | -2 |
| Application Sample 7 | 107 | 105 | -2 |
| Application Sample 8 | 96 | 92 | -4 |
| Comparative Application Sample 1 | 94 | 75 | -19 |
| Comparative Application Sample 2 | 98 | 79 | -19 |
| Comparative Application Sample 3 | 99 | 81 | -17 |
| Comparative Application Sample 4 | 103 | 93 | -10 |
| Comparative Application Sample 5 | 103 | 94 | -9 |

(continued)

| Sample name | $\Delta F_0$/Hz | $\Delta F_0$ (high temperature and high humidity)/Hz | $\Delta F_0$ offset (high temperature and high humidity)/Hz |
|---|---|---|---|
| Comparative Application Sample 6 | 106 | 96 | -10 |
| Comparative Application Sample 7 | 107 | 98 | -9 |
| Comparative Application Sample 8 | 94 | 77 | -17 |

From the test results shown in Table 3 above, it can be seen that the stability and reliability of the iron-modified acoustic materials produced by using the iron-modified molecular sieves as raw materials and shaping them as the acoustic materials for speakers, that is, the iron-modified acoustic materials, has been greatly improved at high temperature and high humidity, as compared with those produced by using unmodified molecular sieves. In particular, for the iron-modified acoustic materials produced from the iron-modified molecular sieves with low silica-alumina ratio (molar ratio of silica to alumina), such as Application Samples 1-3, the stability and reliability in acoustic performance is improved more significantly.

In conclusion, in the Examples of the present disclosure, the molecular sieve is modified with the iron source to produce the iron-modified molecular sieve, and the iron-modified acoustic material is produced from the iron-modified molecular sieves as a raw material, and provided in the rear cavity of the speaker, which can substantially improve its stability and reliability in terms of acoustic performance. The stability and reliability of the molecular sieve acoustic materials with silica-alumina ratio in any range can be improved after iron modification. Especially for the molecular sieve acoustic materials with low silica-alumina ratio (e.g., silica-alumina ratio $\leq$ 400), the stability and reliability in acoustic performance is improved more significantly.

The above description is only specific examples of the present disclosure and cannot be used to limit the implementable scope of the invention, which is defined by the appended claims.

## Claims

1. An iron-modified acoustic material, comprising an iron-modified molecular sieve, a binder, a dispersant and an auxiliary agent; wherein the content of the iron-modified molecular sieve is not less than 70%, the content of iron is 0.004-1.7%, the dry basis content of the dispersant is not more than 1%, and the dry basis content of the auxiliary agent is not more than 15%, based on 100% of the total weight of the iron-modified acoustic material;

   wherein the iron-modified molecular sieve contains silica, alumina and iron elements in the framework thereof; the auxiliary agent comprises one or more of diatomite, silica fume, bentonite and smectite.

2. The iron-modified acoustic material according to claim 1, wherein the content of iron is 0.005-2%, based on 100% of the total weight of the iron-modified molecular sieve.

3. The iron-modified acoustic material according to claim 1 or 2, wherein in the molecular sieve, the molar ratio of silica to alumina is 50-5000.

4. The iron-modified acoustic material according to any preceding claim, wherein the content of the binder is 1-15% measured as the content of the solid component in the binder, based on 100% of the total weight of the iron-modified acoustic material.

5. The iron-modified acoustic material according to any preceding claim, wherein the binder comprises an inorganic binder and/or an organic binder;
   wherein the inorganic binder comprises one or more of silica sol, alumina sol, water glass and pseudo-boehmite; and the organic binder comprises one or more of acrylate-based, epoxy-based and polyurethane-based organic binders.

6. The iron-modified acoustic material according to any preceding claim, wherein the dispersant comprises one or more of glycerin, HPMA, and liquid paraffin.

7. The iron-modified acoustic material according to any preceding claim, wherein the iron-modified acoustic material is in the shape of microspheres having a size of 50-400 $\mu$m, blocks or flakes.

8. A method for producing the iron-modified acoustic material according to any one of claims 1-7, comprising:

   homogeneously mixing an iron-modified molecular sieve, a binder, a dispersant, and an auxiliary agent to obtain a suspension, and shaping the suspension to produce the iron-modified acoustic material, wherein the content of the iron-modified molecular sieve is not less than 70%, the content of iron is 0.004-1.7%, the dry basis content of the dispersant is not more than 1%, and the dry basis content of the auxiliary agent is not more than 15%, based on 100% of the total weight of the iron-modified acoustic material.

9. A speaker comprising one or more acoustic sensors and one or more housings which together form a rear cavity of the speaker, wherein the rear cavity of the speaker is provided with the iron-modified acoustic material according to any one of claims 1-7.

10. An electronic device provided with the iron-modified acoustic material according to any one of claims 1-7 in a rear cavity of a speaker of the electronic device.

11. The electronic device according to claim 10, wherein the electronic device comprises a smartphone, a TWS earphone, a headset, a smart glass, a smart watch, a VR device, an AR device, a tablet PC or a thin and light laptop.


**Patentansprüche**

1. Eisenmodifiziertes akustisches Material, ein eisenmodifiziertes Molekularsieb, ein Bindemittel, ein Dispergens und ein Hilfsmittel umfassend; wobei, bezogen auf 100 % des Gesamtgewichts des eisenmodifizierten akustischen Materials, der Gehalt des eisenmodifizierten Molekularsiebs nicht weniger als 70 % beträgt, der Gehalt an Eisen 0,004 bis 1,7 % beträgt, der Trockenbasisgehalt des Dispergens nicht mehr als 1% beträgt, und der Trockenbasisgehalt des Hilfsmittels nicht mehr als 15 % beträgt;

   wobei das eisenmodifizierte Molekularsieb in dem Gerüst davon Siliziumoxid, Aluminiumoxid und Eisenelemente enthält;
   das Hilfsmittel eines oder mehrere von Diatomit, Silikastaub, Bentonit und Smektit umfasst.

2. Eisenmodifiziertes akustisches Material nach Anspruch 1, wobei der Gehalt an Eisen, bezogen auf 100 % des Gesamtgewichts des eisenmodifizierten Molekularsiebs, 0,005 bis 2 % beträgt.

3. Eisenmodifiziertes akustisches Material nach Anspruch 1 oder 2, wobei das molare Verhältnis von Siliziumoxid zu Aluminiumoxid in dem Molekularsieb 50 bis 5 000 beträgt.

4. Eisenmodifiziertes akustisches Material nach einem vorhergehenden Anspruch, wobei der Gehalt des Bindemittels, bezogen auf 100 % des Gesamtgewichts des eisenmodifizierten akustischen Materials, 1 bis 15 % beträgt, gemessen als der Gehalt der Feststoffkomponente in dem Bindemittel.

5. Eisenmodifiziertes akustisches Material nach einem vorhergehenden Anspruch, wobei das Bindemittel ein anorganisches Bindemittel und/oder ein organisches Bindemittel umfasst;
   wobei das anorganische Bindemittel eines oder mehrere von Kieselsol, Aluminiumoxidsol, Wasserglas und Pseudoböhmit umfasst; und das organische Bindemittel eines oder mehrere von organischen Bindemitteln auf Acrylatbasis, Epoxidbasis und Pulyurethanbasis umfasst.

6. Eisenmodifiziertes akustisches Material nach einem vorhergehenden Anspruch, wobei das Dispergens eines oder mehrere von Glycerin, HPMA und flüssigem Paraffin umfasst.

7. Eisenmodifiziertes akustisches Material nach einem vorhergehenden Anspruch, wobei das eisenmodifizierte akustische Material in Form von Mikrokügelchen mit einer Größe von 50 bis 400 $\mu$m, Blöcken oder Flocken vorliegt.

8. Verfahren zum Herstellen des eisenmodifizierten akustischen Materials nach einem der Ansprüche 1 bis 7, Folgendes umfassend:

   homogenes Mischen eines eisenmodifizierten Molekularsiebs, eines Bindemittels, eines Dispergens und eines Hilfsmittels, um eine Suspension zu erhalten, und Formen der Suspension, um das eisenmodifizierte akustische Material herzustellen,

wobei, bezogen auf 100 % des Gesamtgewichts des eisenmodifizierten akustischen Materials, der Gehalt des eisenmodifizierten Molekularsiebs nicht weniger als 70 % beträgt, der Gehalt an Eisen 0,004 bis 1,7 % beträgt, der Trockenbasisgehalt des Dispergens nicht mehr als 1 % beträgt, und der Trockenbasisgehalt des Hilfsmittels nicht mehr als 15 % beträgt.

9. Lautsprecher, einen oder mehrere akustische Sensoren und ein oder mehrere Gehäuse umfassend, die zusammen einen hinteren Hohlraum des Lautsprechers bilden, wobei der hintere Hohlraum des Lautsprechers mit dem eisenmodifizierten akustischen Material nach einem der Ansprüche 1 bis 7 versehen ist.

10. Elektronische Vorrichtung, versehen mit dem eisenmodifizierten akustischen Material nach einem der Ansprüche 1 bis 7 in einem hinteren Hohlraum eines Lautsprechers der elektronischen Vorrichtung.

11. Elektronische Vorrichtung nach Anspruch 10, wobei die elektronische Vorrichtung ein Smartphone, einen TWS-Ohrhörer, ein Headset, eine smarte Brille, eine Smartwatch, eine VR-Vorrichtung, eine AR-Vorrichtung, ein Tablet oder einen dünnen und leichten Laptop umfasst.

**Revendications**

1. Matériau acoustique modifié au fer, comprenant un tamis moléculaire modifié au fer, un liant, un dispersant et un agent auxiliaire ; la teneur en tamis moléculaire modifié au fer n'étant pas inférieure à 70 %, la teneur en fer allant de 0,004 à 1,7 %, la teneur en base sèche du dispersant n'étant pas supérieure à 1 %, et la teneur en base sèche de l'agent auxiliaire n'étant pas supérieure à 15 %, rapportés à 100 % du poids total du matériau acoustique modifié au fer ;

le tamis moléculaire modifié au fer contenant de la silice, de l'alumine et des éléments fer dans la structure de celui-ci,
l'agent auxiliaire comprenant un ou plusieurs éléments parmi la diatomite, la fumée de silice, la bentonite et la smectite.

2. Matériau acoustique modifié au fer selon la revendication 1, dans lequel la teneur en fer va de 0,005 à 2 %, rapportés à 100 % du poids total du tamis moléculaire modifié au fer.

3. Matériau acoustique modifié au fer selon la revendication 1 ou 2, dans lequel, dans le tamis moléculaire, le rapport molaire de la silice à l'alumine va de 50 à 5 000.

4. Matériau acoustique modifié au fer selon l'une quelconque des revendications précédentes, dans lequel la teneur en liant va de 1 à 15 %, mesuré en tant que teneur en composant solide dans le liant, rapportés à 100 % du poids total du matériau acoustique modifié au fer.

5. Matériau acoustique modifié au fer selon l'une quelconque des revendications précédentes, dans lequel le liant comprend un liant inorganique et/ou un liant organique ;
le liant inorganique comprenant un ou plusieurs éléments parmi la sol de silice, la sol d'alumine, le verre soluble et la pseudoboehmite ; et le liant organique comprenant un ou plusieurs éléments parmi des liants organiques à base d'acrylate, à base d'époxy et à base de polyuréthane.

6. Matériau acoustique modifié au fer selon l'une quelconque des revendications précédentes, dans lequel le dispersant comprend un ou plusieurs éléments parmi la glycérine, le HPMA et du paraffine liquide.

7. Matériau acoustique modifié au fer selon l'une quelconque des revendications précédentes, dans lequel le matériau acoustique modifié au fer se présente sous la forme de microsphères d'une taille de 50 à 400 $\mu$m, de blocs ou de flocons.

8. Procédé de production du matériau acoustique modifié au fer selon l'une quelconque des revendications 1 à 7, comprenant :

le mélange homogène d'un tamis moléculaire modifié au fer, d'un liant, d'un dispersant et d'un agent auxiliaire pour obtenir une suspension, et le façonnage de la suspension pour produire le matériau acoustique modifié au fer ;

la teneur en tamis moléculaire modifié au fer n'étant pas inférieure à 70 %, la teneur en fer allant de 0,004 à 1,7 %, la teneur en base sèche du dispersant n'étant pas supérieure à 1 %, et la teneur en base sèche de l'agent auxiliaire n'étant pas supérieure à 15 %, rapportés à 100 % du poids total du matériau acoustique modifié au fer.

9. Haut-parleur comprenant un ou plusieurs capteurs acoustiques et un ou plusieurs boîtiers qui forment ensemble une cavité arrière du haut-parleur, la cavité arrière du haut-parleur étant pourvue du matériau acoustique modifié au fer selon l'une quelconque des revendications 1 à 7.

10. Appareil électronique pourvu du matériau acoustique modifié au fer selon l'une quelconque des revendications 1 à 7 dans une cavité arrière d'un haut-parleur de l'appareil électronique.

11. Appareil électronique selon la revendication 10, l'appareil électronique comprenant un smartphone, un écouteur TWS, un casque audio, des lunettes connectées, une montre connectée, un appareil de réalité virtuelle, un appareil de réalité augmentée, une tablette électronique ou un ordinateur portable mince et léger.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 106888423 A
- CN 107335464 B
- CN 106792387 A
- CN 105049997 A